(19) Europäisches Patentamt / European Patent Office / Office européen des brevets

(11) **EP 3 282 592 B1**

(12) **EUROPEAN PATENT SPECIFICATION**

(45) Date of publication and mention
of the grant of the patent:
**04.09.2019 Bulletin 2019/36**

(51) Int Cl.:
*H04B 7/024* (2017.01)      *H04L 1/06* (2006.01)
*H04W 36/32* (2009.01)      *H04L 5/00* (2006.01)

(21) Application number: **16183557.4**

(22) Date of filing: **10.08.2016**

(54) **SYSTEM COMPRISING A FIRST AND A SECOND NODE OF A LINEAR CELLULAR NETWORK**

SYSTEM MIT EINEM ERSTEN UND EINEM ZWEITEN KNOTEN EINES LINEAREN ZELLULAREN NETZWERKS

SYSTÈME COMPRENANT UN PREMIER ET UN SECOND NOEUD D'UN RÉSEAU CELLULAIRE LINÉAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.02.2018 Bulletin 2018/07**

(73) Proprietor: **Kapsch CarrierCom AG**
**1120 Wien (AT)**

(72) Inventors:
• **GRUET, Christophe**
**78180 Montigny le Bretonneux (FR)**
• **JACQUES, Roger**
**78320 Lévis Saint Nom (FR)**
• **BOTET, Gil**
**78180 Montigny-le-Bretonneux (FR)**

(74) Representative: **Weiser, Andreas**
**Patentanwalt**
**Kopfgasse 7**
**1130 Wien (AT)**

(56) References cited:
WO-A1-2016/119914      US-A1- 2010 157 901
US-A1- 2013 150 054      US-A1- 2014 169 505

• **SHENGFENG XU ET AL: "A Survey on High-Speed Railway Communications: A Radio Resource Management Perspective", ARXIV.ORG, CORNELL UNIVERSITY LIBRARY, 201 OLIN LIBRARY CORNELL UNIVERSITY ITHACA, NY 14853, 17 March 2016 (2016-03-17), XP080690265,**
• **Liang Heng ET AL: "Performance of the 3GPP LTE Space-Frequency Block Codes in Frequency-Selective Channels With Imperfect Channel Estimation", IEEE TRANSACTIONS ON VEHICULAR TECHNOLOGY., vol. 64, no. 5, 1 May 2015 (2015-05-01), pages 1848-1855, XP055553438, US ISSN: 0018-9545, DOI: 10.1109/TVT.2014.2341612**

**Description**

The present invention relates to a system comprising a first and a second node of a linear cellular network, wherein the nodes are spaced apart from each other with a mutual spacing, which mutual spacing defines a communication section, each node having at least one antenna for wirelessly communicating with a user terminal located in the communication section between the first and the second node, wherein both nodes are configured to communicate over a communication channel having a plurality of channel resources.

A cellular network comprises a plurality of radio transceivers or "nodes", through which users can gain access to the network by means of user terminals. For example, in cellular networks according to the LTE standard, a node is referred to as "eNB" (evolved Node B). Each node comprises an antenna and defines a cell, which is delimited by the coverage area of the antenna. If a user terminal is within the coverage area of a node, it can wirelessly communicate with the node by sending and receiving data to and from the node. To improve the signal-to-noise ratio (SNR) experienced by the user terminals and thereby increasing the throughput, MIMO (Multiple Input Multiple Output) and MISO (Multiple Input Single Output) modes can be employed in the network, as will be explained in the following for the case of one-dimensional cellular network.

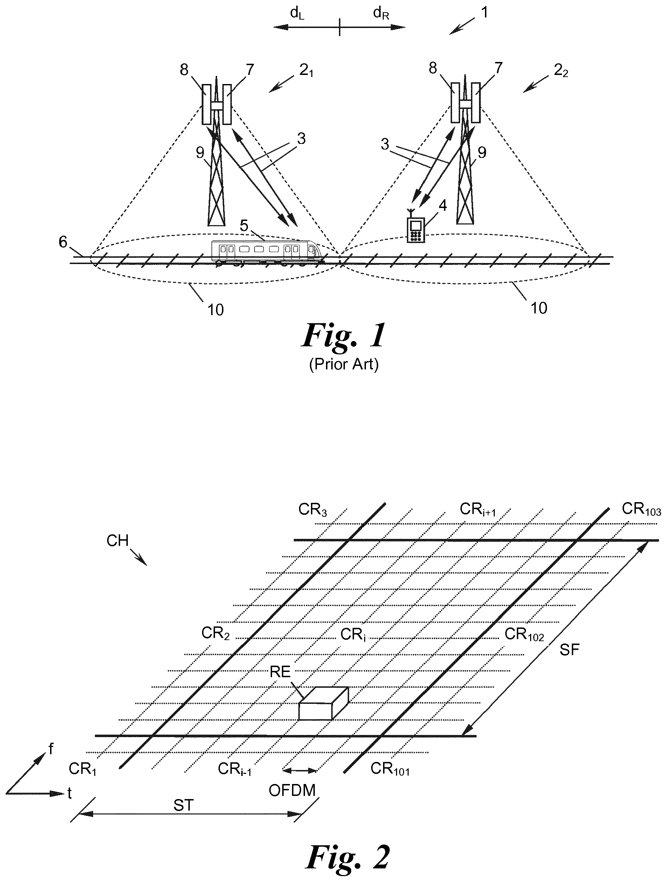

Fig. 1 shows a system 1 of two nodes $2_1$, $2_2$ of a conventional cellular network with a one-dimensional ("linear") cell topology. In this type of network, the nodes $2_1$, $2_2$ communicate data 3 with user terminals 4, which only travel in one direction $d_L$ or the corresponding opposite direction $d_R$, e.g., by riding on a train 5 on a railway track 6, driving by car on a highway or in a tunnel, et cet. The communication between the nodes $2_1$, $2_2$ and the user terminal 4 is conducted by communication standards known in the state of the art, such as 3GPP LTE/LTE-A or IEEE WiMAX 802.16e. In such communication standards, the communication channel CH of a node $2_1$, $2_2$ is divided in frequency f and/or time t into multiple channel resources $CR_1$, $CR_2$, ... generally $CR_i$, as can be seen in Fig. 2, which will be described in detail later.

With further reference to Fig. 1, each node $2_1$, $2_2$ has two omni-directional antennas 7, 8 mounted on a support 9. Omni-directional antennas communicate data 3 in both directions $d_L$, $d_R$ of the node $2_1$, $2_2$, i.e., it does not matter if a user terminal 4 is located to the left or to the right of a node $2_1$, $2_2$ to establish communication. Each antenna 7, 8 thus exhibits the same coverage area 10 such that they substantially overlap.

The two antennas 7, 8 transmit the same data content but in different physical representations, which are derived from the data 3 by applying, for example, an Alamouti scheme onto the data 3. The user terminal 4 receives the two physical representations of the same data 3 from the two antennas 7, 8 of the node $2_1$ and decodes the received superposed signal to obtain the original data content. By receiving the same data content twice but in different physical representations, the signal-to-noise ratio can be improved.

When the user terminal 4 leaves the coverage area 10 of the first node $2_1$ and enters the coverage area 10 of the neighbouring, second node $2_2$, a handover has to be performed, which may interrupt communication between the user terminal 4 and the network 1 for a short period of time. This is especially troublesome for high-speed trains travelling within the network 1 since the frequency of handovers increases with the speed of the train.

Furthermore, the downlink throughput at the edge of a coverage area 10, i.e., in the middle between two nodes $2_1$, $2_2$, is very low since the cell boundaries are located at equal distances from both nodes $2_1$, $2_2$. This causes a bad signal-to-noise ratio because the received signal from the communicating node $2_1$ is just as strong as the signal from an interfering neighbouring node $2_2$.

US 2010/0157901 A1 shows a two-dimensional cellular network, in which user terminals can travel in any given direction. In such a system it is known to employ a Alamouti Space-Time Coding.

US 2014/0169505 A1 shows systems and methods relating to space-time/ space-frequency coding for multi-cite and multi-beam transmissions.

WO 2016/119914 A1 shows a linear cellular network in which coordinated multipoint (CoMP) techniques are employed.

SHENGFU XU, et al: "A Survey on High-Speed Railway Communications: A Radio Resource Management Perspective", ARXIV.ORG, Cornell University Library, 201 Olin Library Cornell University Ithaca, NY 14853, 17 March 2016, XP080690265, summarizes various aspects of high-speed railway communications. MIMO is described for railway communications in a variant in which multiple antennas are mounted on one node.

LIANG HENG, et al: "Performance of the 3GPP LTE Space-Frequency Block Codes in Frequency-Selective Channels With Imperfect Channel Estimation", IEEE Transactions on vehicular technology, vol. 64, no. 5, 1 May 2015, pages 1848-1855, XP055553438, describes the general-purpose Alamouti space-time block coding. The Alamouti scheme is shown for two and four antenna setups.

It is an aim of the present invention to overcome the abovementioned drawbacks.

To this end, the invention provides for a system of the aforementioned type, wherein a processor of the system is configured to apply a space-time or space-frequency block coding scheme, preferably an OFDM space-frequency block coding scheme, on data to be communicated to the user terminal to generate a first and a second block code representation of the same data, wherein the first node is configured to communicate the first block code representation of the data to the user terminal in one of the channel resources and the second node is configured to communicate the second block code representation of the data to the user terminal in the same channel resource.

By splitting up the so-called main and diversity antennas of the MIMO/MISO scheme into two different nodes, a higher throughput can be achieved at distances further away from the nodes. This is due to the fact that the neighbouring node now does not interfere with the communicating node but actually enhances its signal by communicating the same data content in a different physical representation. This is especially useful in the central area between two nodes since in this area the received signal strength in the user terminals is very low due to the inverse-quadratic dependency of the signal strength with distance.

In the classical case, interferences are especially troublesome for user terminals at the edge of the coverage area of the node they are communicating with since usually the neighbouring node wants to communicate in the same channel resource with a different user terminal. Contrary to that, the setup of the invention allows both nodes to communicate in the same channel resource without causing interferences.

Furthermore, no hard handovers have to be performed when the user terminal leaves the coverage area of one node and enters the coverage area of the neighbouring node. The user terminals can now travel from one node to the next without experiencing hard handovers, thus significantly increasing the overall reliability, especially when the user terminals travel with high speed. This also reduces computation times and workload in the nodes of the network.

The first node comprises a first and a second directional antenna, which are directed in substantially opposite directions, wherein data can be independently communicated over both antennas in the same channel resource. This allows for doubling the throughput of each node since user terminals on the right side and user terminals on the left side of the node can be served independently by the node.

The first directional antenna of the first node is configured to communicate the first block code representation of data and the second directional antenna of the same first node is configured to communicate the second block code representation of data. To this end, for example, each node carries a main and a diversity antenna. In this case, nodes do not have to be aligned in an alternating manner but nodes of the same type can be placed all along the railway track, tunnel, or highway. This significantly facilitates logistics during construction of the network. Each node here comprises the same hardware structure and components. A situation in which two neighbouring nodes are incompatible is thus practically impossible, as otherwise nodes of different types have to be mixed.

In a first preferred embodiment of the invention, the space-time or space-frequency block coding scheme is an Alamouti scheme, in which the data to be communicated to the user terminal consists of a first and a second data symbol, the first representation having the first data symbol followed by the second data symbol and the second representation having a negative complex-conjugate of the second data symbol followed by a complex-conjugate of the first data symbol. This allows for an efficient MIMO/MISO mode with two transmit antennas. The user terminal can itself have one, two, or more receive antennas to further enhance the quality of the received signal. By using a representation with only two sequential data symbols involved, a configuration with only two transmit antennas can be employed, thus reducing the complexity of the system in comparison to a system with four transmit antennas.

In a second preferred embodiment of the invention, each node has two antennas for wirelessly communicating with a user terminal located in the communication section between the first and the second node such that an Alamouti scheme with four transmit antennas can be employed. By using four transmit antennas, the signal-to-noise ratio can further be improved. In this scheme, for example four sequential data symbols are involved when generating the different block code representations, as known to the person skilled in the art.

Nodes comprising a main antenna as well as a diversity antenna have a further glaring advantage when the coverage areas of the first and the second directional antenna of the first node overlap in an area substantially underneath the node, wherein the system is configured to communicate, when the user terminal is located at a distance from the first node lower than a near-area threshold, the first block code representation of the data in one of the channel resources via the first antenna of the first node and to communicate the second block code representation of the same data in the same channel resource via the second antenna of the first node. In this case, one node can employ a MIMO/MISO mode underneath the node all by itself since it comprises a main antenna as well as a diversity antenna. It is thus possible that a user terminal communicates with a single node in the MIMO/MISO scheme when it is underneath this node and can immediately transit into the MIMO/MISO mode in an area between two nodes as described before. The MIMO/MISO mode is thus supported over the whole network.

A further advantage of said embodiment is that throughput in a near region of the node is increased. While initially giving up throughput in an area near a node and gaining throughput in an area far from the node through the setup of the invention, this can be remedied by reverting to the classical MIMO/MISO mode operated by two antennas on a single node when the user terminal is in a near-area region of the node. The advantages of both embodiments are thus combined to reach a maximum throughout along the whole extent of the network.

Generally, the MIMO/MISO mode by means of two nodes can be applied over the whole communication section. Since the MIMO/MISO mode effected by the two nodes is less efficient when it is unbalanced, i.e., in an area close to one of the two nodes, the system is preferably configured to communicate data only via the first node when the user terminal is located at a distance from the first node lower than a first far-area threshold, wherein the system is configured to communicate data only via the second node when the user terminal is located at a distance from the second node lower than a second far-area threshold, and wherein the system is configured to communicate data by both nodes when the user terminal is located at a distance from the first node higher than the first far-area threshold and at a distance from the second node higher than the second far-area threshold. This has the advantage that channel resources can be freed up for a node when the user terminal is close to another node, i.e., when the MIMO/MISO mode by means of two antennas is unbalanced. In the first instance, this reduces computational costs in the user terminal when no significant signal-to-noise ratio reduction can be achieved.

In the second instance, the total throughput of the system can be increased when two different user terminals are close to two different neighbouring nodes. To this end, the system is preferably configured to, when the first node communicates with a first user terminal located at a distance from the first node lower than the first far-area threshold, communicate data with a second user terminal located at a distance from the second node lower than the second far-area threshold in the same channel resource. The same channel resource can thus be used for two user terminals on the same communication section but close to two different nodes.

Preferably, the distance of the user terminal to either of the nodes is determined by means of a received signal strength indication or by means of a timing advance value. This allows for an efficient determination of the distance by either one or both of the nodes.

To reduce the abovementioned handovers, the system is configured to use the same physical cell identifier for at least the first and the second node, preferably for six nodes in total, to form a first extended cell, wherein a common scheduler is connected to each of the nodes in the first extended cell and is configured to allocate channel resources. The user terminals thus never experience a handover when travelling through an extended cell. The number of nodes within an extended cell is chosen as high as possible but is also limited by hardware and software constraints. A handover-free system is especially advantageous in combination with the proposed multi-node MIMO/MISO mode since no internal interferences have to be considered with an extended cell at all.

To construct an even larger network, multiple extended cells can be adjoined. To this end, the system has a second extended cell with the same properties as the first extended cell, wherein a coverage area of a left border node of the first extended cell overlaps with a coverage area of a right border node of the second extended cell. By means of this, the length of the one-dimensional network can be arbitrarily increased while still taking into consideration the constraints of the system.

There are two ways to handle communication with a user terminal travelling from one extended cell to another extended cell. Firstly, the cell boundary between the extended cells can be treated in a classical manner, e.g., a classical handover procedure is performed for the user terminal switching extended cells. This implies, however, that no MIMO/MISO mode according to the invention is available on a communication section between the bordering nodes of the extended cells.

Secondly, the invention also provides a way of maintaining the MIMO/MISO mode according to the invention on the communication section between the bordering nodes of the extended cells. To this end, the common scheduler of the first extended cell is configured to allocate a subset of all available channel resources for communication to an antenna of said left border node facing the second extended cell, and the common scheduler of the second extended cell is configured to allocate the remaining available channel resources for communication to an antenna of said right border node facing the first extended cell, wherein the system is configured to provide data to be communicated by the right border node also to the left border node and is further configured to provide data to be communicated by the left border node also to the right border node, and wherein the left border node communicates the first block code representation of said data to a user terminal between the left border node and the right border node and the right border node communicates the second block code representation of said data to said user terminal between the left border node and the right border node. Providing the data to be communicated to the right border node as well as to the left border node is preferably performed by means of a dual remote radio head (RRH). This has significantly more advantages over simply connecting the two common schedulers with each other since the latter would cause very high latency in the system. By means of the invention, direct communication between the common schedulers can be avoided by letting each scheduler only handle preferably half of the available channel resources. A handover-less way of adjoining extended cells can thus be achieved by using the same physical cell identifier for both extended cells.

Most communication standards such as LTE employ common channels used for system access and control messages, which common channels are distributed in intervals over the whole bandwidth. In a first embodiment of the invention, the common scheduler of the first extended cell or the common scheduler of the second extended cell is configured to generate data associated with common channels of the cellular network. This is possible since the content and the exact location of the common channels is known by both common schedulers. This embodiment has the advantage that the initial splitting of the resource channels into orthogonal subsets can be maintained.

In a second embodiment, the scheduler of the first extended cell and the scheduler of the second extended cell are each configured to generate data associated with common channels of the cellular network in their respective subset of available channel resources. This has the advantage that the common channels do not need to be split up, and all the computational efforts can be shifted to one scheduler, thus relieving the other common scheduler of determining the content of the common channels.

Furthermore, the user specific search space has to be handled by both schedulers. Contrary to the case of the common channels, the resource elements in which grants for user terminals are communicated to the user terminals, the so-called common channel elements, are not predetermined since only present user terminals have to be considered by the scheduler/s.

To solve this problem, the scheduler of the first extended cell and the scheduler of the second extended cell are each configured to handle grants of channel resources to user terminals in common channel elements lying in their respective subset of available channel resources. An effective way of handling allocation grants to user terminals is thus achieved without impacting the user terminal behaviour.

The invention shall now be explained in more detail below on the basis of preferred exemplary embodiments thereof with reference to the accompanying drawings, in which:

Fig. 1 shows a linear cellular network employing a MIMO/MISO mode according to the state of the art in a schematic perspective view;

Fig. 2 shows an exemplary allocation of channel resources;

Fig. 3 shows a linear cellular network employing a MIMO/MISO mode according to the invention in a schematic perspective view;

Fig. 4 shows the computed throughput of the network of Fig. 3 compared to the throughput of the network of Fig. 1 in relation to the distance of a user terminal from a node;

Fig. 5 shows a first variant of the linear cellular network of Fig. 3 in a schematic perspective view;

Fig. 6 shows an embodiment of the node of the linear cellular network of Fig. 3 in a schematic perspective view;

Fig. 7 shows a second variant of the linear cellular network of Fig. 3 in a schematic perspective view;

Fig. 8 shows a third variant of the linear cellular network of Fig. 3 in a schematic perspective view;

Fig. 9 shows a forth variant of the linear cellular network of Fig. 3 in a schematic perspective view;

Fig. 10 shows extended cells according to the invention; and

Fig. 11 shows a connection of the border nodes of two extended cells of Fig. 10.

With respect to Fig. 1, which shows the state of the art, it is referred to the introduction. In the following description of Figs. 2 to 11, same reference numerals are used for same components as in Fig. 1.

Just as discussed above for the state of the art, the field of the embodiments described below is a linear, one-dimensional network of nodes $2_1, 2_2, 2_3, ...$ generally $2_k$, communicating data 3 with user terminals 4. Linear or one-dimensional means in this context that the nodes $2_k$ are arranged in a chain-like manner so that a user terminal 4 can move from one node $2_k$ to the next node $2_{k+1}$ or $2_{k-1}$ without interrupting communication. To this end, a first exemplary node $2_1$ has an antenna 11 with a coverage area $10_1$ and a second exemplary node $2_2$ has an antenna $2_2$ with a coverage area $10_2$ overlapping with the coverage area $10_1$.

The standard for communication can be as described before, e.g., LTE, LTE-A or IEEE WiMAX 802.16e, wherein the communication channel CH is divided into multiple channel resources $CR_i$ as can be seen in Fig. 2.

Fig. 2 shows an exemplary definition of the communication channel CH used by the nodes $2_k$ for communication. The channel CH is subdivided in frequency f into frequency bands SF and in time t into time slots ST; a combination of a frequency band SF and a time slot ST is called a channel resource $CR_i$. Of course, the communication channel CH could also be divided only in time t into time slots ST, such as in TDMA (time division multiple access) standards; or be divided only in frequency f into frequency bands SF, such as in FDMA (frequency division multiple access) standards. In LTE, a channel resource $CR_i$ is called a "resource block" and carries six or seven OFDM symbols on 12 subcarriers, one subcarrier of one OFDM symbol representing a resource element RE of the resource block $CR_i$.

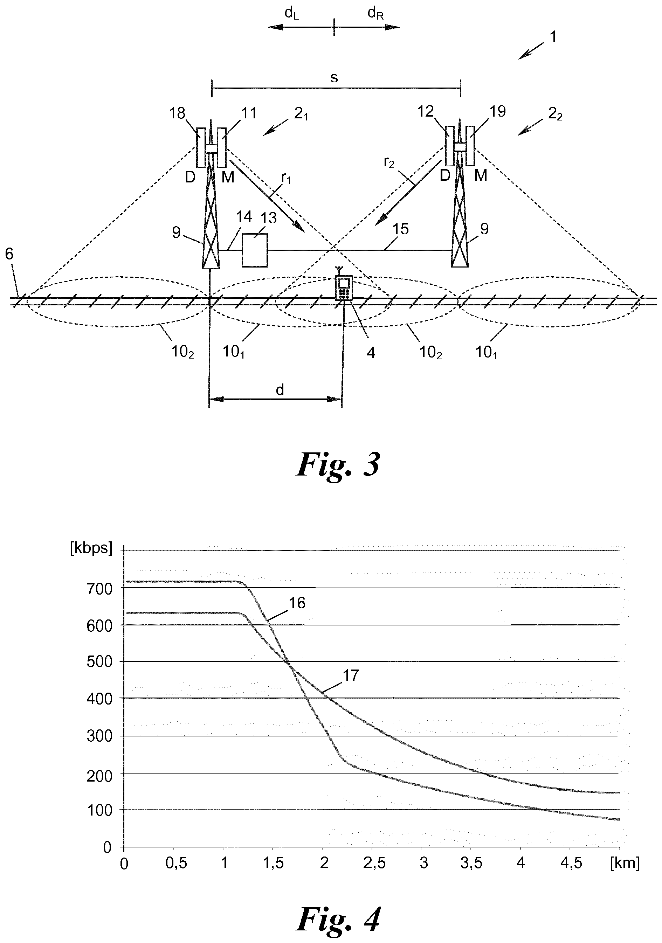

Fig. 3 shows a system 1 of a first and a second exemplary node $2_1, 2_2$ of the one-dimensional network 4. The nodes $2_1, 2_2$ are spaced apart from each other with a mutual spacing s, which defines a communication section s.

To employ a MIMO/MISO (Multiple Input Multiple Output - there are multiple transmit antennas in the node/s and multiple receive antennas at the user terminal; Multiple Input Single Output - there are multiple transmit antennas in the node/s and a single receive antenna at the user terminal) mode, the same data 3 is communicated by the antenna 11 of the first node $2_1$ and by the antenna 12 of the second node $2_2$ independently but in different block code representations $r_1, r_2$. The user terminal 4 receives a signal consisting of the superposed physical representations $r_1, r_2$ from the antennas 11, 12 of the first and the second node $2_1, 2_2$ and then decodes the received superposed signal from the two antennas 11, 12 to determine the correct content of the data 3.

To generate the two physical representations $r_1, r_2$, the data 3 is split up into a first and a second data symbol $ds_1, ds_2$, such that the two physical representa-

tions $r_1$, $r_2$ can be defined by

$$r_1 = \{ds_1, \; ds_2\},$$

$$r_2 = \{-ds_2{}^*, \; ds_1{}^*\},$$

wherein $ds_2{}^*$, $ds_1{}^*$ denotes a complex conjugate of the first and second data symbol $ds_1$, $ds_2$, respectively. In this case, a data symbol $ds_1$, $ds_2$ can correspond to a resource block $CR_i$ of LTE, for example.

To obtain the first and second block code representations $r_1$, $r_2$, a processor 13 applies a space-time block coding (STBC) scheme or a space-frequency block coding (SFBC) scheme on the data 3 to be communicated to the user terminal 4. The processor 13 can be connected to the nodes $2_1$, $2_2$ via links 14, 15. Alternatively, separate processors 13 can be included in both antennas 11, 12 or only in the second antenna 12 since no processing power is needed for the first block code representation $r_1$. In the following, the antenna 11 transmitting the first block code representation $r_1$ will be referred to as the "main" antenna M and the antenna 12 transmitting the second block code representation $r_2$ will be referred to as the "diversity" antenna D. If the block code representations $r_1$, $r_2$ are used as above, the space-time or space-frequency block coding scheme is referred to as an Alamouti scheme with two transmit antennas. Different schemes for space-time or space-frequency block coding schemes can be employed as well, for example any kind of orthogonal, non-orthogonal, or quasi-orthogonal space-time or space-frequency block coding scheme, e.g., an OFDM space-frequency block coding scheme. Higher order space-time or space-frequency block coding schemes are also feasible, as will be described below.

Fig. 4, in which the throughput is denoted on the vertical axis in kilobyte per second (kbps) and the distance of a user terminal 4 to the closest node $2_1$ is denoted in kilometres (km), shows that the throughput 16 of the classical system shown in Fig. 1 differs from the throughput 17 achieved by the configuration as shown in Fig. 3. For far-area regions of a node $2_k$, the throughput of the system 1 of Fig. 3 is higher due to the fact that in the classical system 1 of Fig. 1 the amount of bandwidth that can be used by user terminals 4 in far-area regions is only half of the whole bandwidth since a user terminal 4 or multiple user terminals 4 cannot be served by both nodes $2_1$, $2_2$ in the same channel resource $CR_i$ due to interferences. It is further noted that the throughput 17 of the system of Fig. 3 is lower near a node $2_k$ in near-area regions of the node $2_k$ since the MIMO/MISO mode becomes unbalanced due to the differing distances d of the user terminal 4 to the two nodes $2_1$, $2_2$. The distance of the user terminal to the node can be determined by the received signal strength indication RSSI or by a timing advance TA value in either or both of the closest nodes $2_1$, $2_2$.

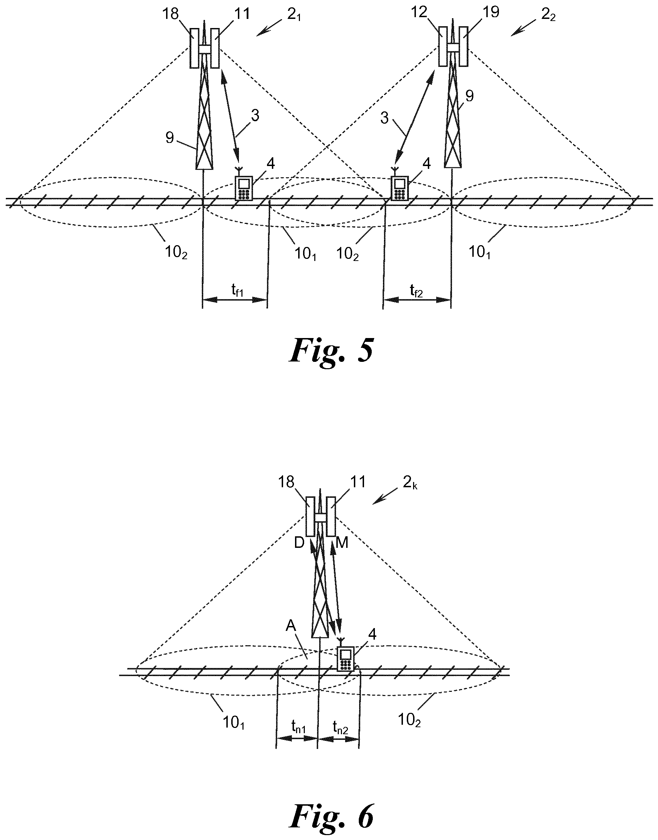

Since the MIMO/MISO mode of Fig. 3 is only effective in a central region of the communication section s, data 3 is only communicated by a single node $2_k$ if the user terminal 4 is located at a distance d from this node $2_k$ lower than a far-area threshold $t_{f1}$, $t_{f2}$ (see Fig. 5). Nodes $2_k$ can employ different far-area thresholds, e.g., a first far-area threshold $t_{f1}$ and a second far-area threshold $t_{f2}$ as shown for the nodes $2_1$ and $2_2$. When the user terminal 4 is located at a distance d from the first node $2_1$ higher than the first far-area threshold $t_{f1}$ and at a distance d from the second node $2_2$ higher than the second far-area threshold $t_{f2}$, i.e., in the central area of the communication section s, data 3 is communicated by both nodes $2_1$, $2_2$. The far-area thresholds $t_{f1}$, $t_{f2}$ can, for example, be chosen as the intersection of the throughputs 16, 17 shown in Fig. 3.

Furthermore, the user terminal 4 can receive commands from either node $2_1$, $2_2$ to manage the uplink behaviour of the user terminal 4. To this end, the user terminal 4 can receive a timing advance TA to adjust its uplink timing to compensate for the time a signal transmitted by the user terminal 4 takes to reach the nodes $2_k$. This timing advance TA is dependent on the distance d between the user terminal 4 and the receiving node $2_k$. When the user terminal 4 is located at a central region between two nodes $2_1$, $2_2$, i.e., when the user terminal 4 is located at a distance d from the nodes $2_k$ higher than the respective far-area threshold $t_{f1}$, $t_{f2}$, the timing advance TA can be chosen as TA = $(TA_1 + TA_2)/2$, wherein $TA_1$, $TA_2$ is the timing advance determined by the respective node $2_1$, $2_2$. Otherwise, i.e., when the user terminal 4 is located at a distance d from a node $2_k$ lower than the respective far-area threshold $t_{f1}$, $t_{f2}$, the timing advance is only chosen for the closer node as TA = $\min(TA_1, TA_2)$.

The timing advance TA can also be coupled to the strength of the received signal at the nodes $2_1$, $2_2$, such that TA = $\alpha_1 * TA_1 + \alpha_2 * TA_2$, wherein $\alpha_1$, $\alpha_2$ are weighting factors proportional to the power level from a received signal in the respective node $2_1$, $2_2$.

Additionally to the timing offset, a signal transmitted by the user terminal 4 and received in the nodes $2_1$, $2_2$ is subject to a Doppler shift DS due to the speed of the user terminal 4. This Doppler shift DS will be of equal magnitude in both nodes $2_1$, $2_2$ but have a different sign such that a signal is received with a Doppler shift +DS in one of the nodes $2_1$ and with a Doppler shift -DS in the other node $2_2$. When a user terminal 4 knows that a Doppler shift DS is present, either through an indication by one or both nodes $2_1$, $2_2$ or through an autonomous determination by means of two received signals from the nodes $2_1$, $2_2$, the user terminal 4 can adjust its transmission such that one node $2_1$ receives a null Doppler shift and the second node $2_2$ receives the signal with a Doppler shift of 2DS. This increases the receiver performance of at least the node $2_1$.

When there are two user terminals 4 located on the communication section s, see Fig. 5, and both user terminals 4 are below the far-area threshold $t_{f1}$, $t_{f2}$ of their respective closest node $2_1$, $2_2$, data 3 can be independently communicated to each user terminal 4 by the nodes $2_1$, $2_2$ in the same channel resource $CR_i$. This again doubles the global throughput since two communications can be independently performed on the communication section s in the same channel resource $CR_i$.

Coming back to Fig. 3, it can be seen that the first node $2_1$ comprises a first directional antenna 11 having a coverage area $10_1$ and a second directional antenna 18 having a coverage area $10_2$. The directional antennas 11, 18 are directed in substantially opposite directions $d_R$, $d_L$, and data 3 can be communicated independently over both directional antennas 11, 18 in the same channel resource $CR_i$. In this embodiment, the first directional antenna 11 is the main antenna M communicating data 3 in the first block code representation $r_1$ and the second directional antenna 18 is the diversity antenna D communicating data 3 in the second block code representation $r_2$. From Fig. 3 it can furthermore be seen that the neighbouring node $2_2$ also has two directional antennas 12, 19, more specifically one main antenna M and one diversity antenna D, wherein the coverage are $10_1$ of the main antenna M of the first node $2_1$ overlaps with the coverage area $10_2$ of the diversity antenna D of the second node $2_2$. Thus, the network 1 can be constructed by placing nodes $2_1$, $2_2$ that have the same hardware configuration along a railway track 6.

Fig. 6 shows that the coverage areas $10_1$, $10_2$ of the first and the second directional antennas 11, 18 of a node $2_k$ may overlap in an area A substantially underneath the node $2_k$, which is defined by near-area thresholds $t_{n1}$, $t_{n2}$. This can be used to employ the MIMO/MISO mode as shown in Fig. 1 for two omni-directional antennas 7, 8. However, here directional antennas 11, 18 of the same node $2_k$ transmit the two block code representation $r_1$, $r_2$ of the same data 3 in the same channel resource $CR_i$.

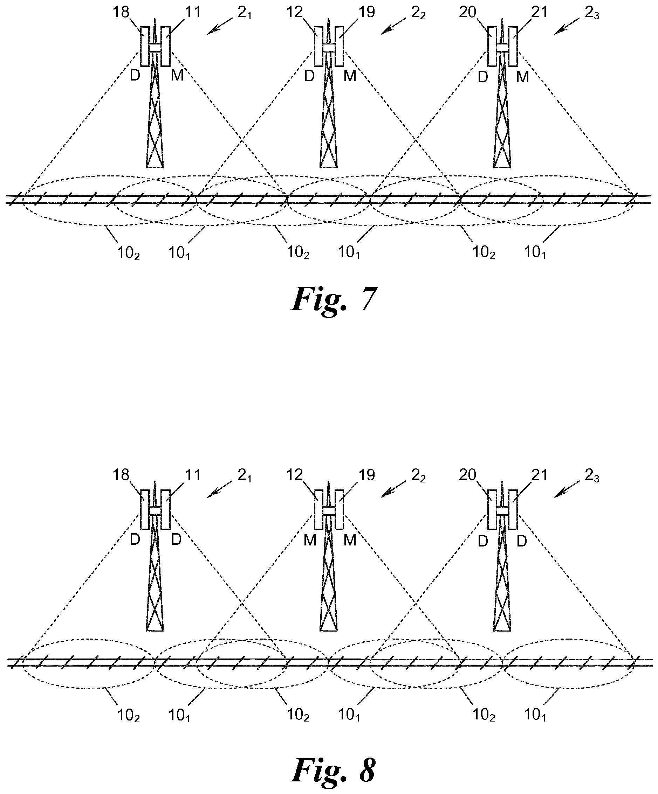

Fig. 7 shows that the usage of a first directional antenna 11, whose coverage area $10_1$ overlaps with the coverage area $10_2$ of a directional antenna 18 on the same node $2_1$ as well as with a coverage area $10_2$ of the antenna 12 of the neighbouring, second node $2_2$, allows for a continuous MIMO/MISO mode along the whole railway track 6.

Alternatively to using a main and a diversity antenna M, D on a single node $2_1$, Fig. 8 shows the construction of a network 1 using nodes $2_1$, $2_2$, $2_3$ that are each equipped with two directional antennas 11, 18; 12, 19; 20, 21 that are both either main or diversity antennas M or D. Such nodes $2_1$, $2_2$, $2_3$ have to be placed in alternating manner along the railway track 6. In this case, it is not possible to employ the MIMO/MISO mode underneath the nodes $2_1$, $2_2$, $2_3$.

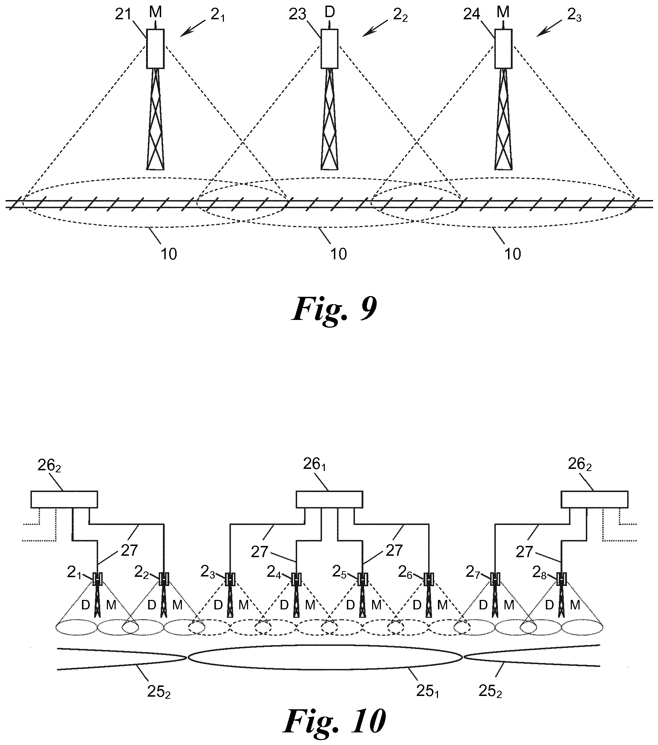

Fig. 9 shows that the concept of Fig. 3 can also be extended to nodes $2_1$, $2_2$, $2_3$ each having one omni-directional antenna 22, 23, 24 that either communicate as main or diversity antennas M, D, i.e., one node $2_1$ communicates data 3 in the first block code representation $r_1$ and the neighbouring node $2_2$ communicates data 3 in the second block code representation $r_2$. Again, in this case it is not possible to employ a MIMO/MISO mode underneath the nodes $2_1$, $2_2$, $2_3$.

To employ a higher order Alamouti scheme, the nodes $2_1$, $2_2$ of Fig. 3 can also be equipped with four antennas (not shown), e.g., one main antenna M and three diversity antennas D, wherein the coverage areas $10_1$, $10_2$ of two antennas completely overlap pairwise. To this end, the processor 13 can generate four block code representations to be communicated by the antennas. Three or more than four antennas are also possible. This concept can also be applied to the schemes of Figs. 9 and 10 to achieve higher order space-time or space-frequency block coding schemes in the central area of the communication section s and lower order space-time or space-frequency block coding schemes underneath the nodes 2 since with four antennas there is always at least one overlapping pair.

Fig. 10 shows the construction of a first extended cell $25_1$ by connecting a common scheduler $26_1$ to each of the nodes $2_1$, $2_2$, $2_3$, $2_4$ within the extended cell $25_1$ by means of data links 27. This common scheduler $26_1$ allocates channel resources $CR_1$ for all nodes $2_1$, $2_2$, $2_3$, $2_4$ within the extended cell $25_1$. The same physical cell identifier PCI is used for all the nodes $2_1$, $2_2$, $2_3$, $2_4$ in the extended cell 16. Thus, no handover is performed when a user terminal 4 travels through the extended cell $25_1$.

There are two ways to connect said extended cell $25_1$ with a second, neighbouring extended cell $25_2$ having the same properties as the first extended cell $25_1$. Firstly, the extended cells $25_1$, $25_2$ can use different physical cell identifiers PCI and a handover is performed when a user terminal 4 switches from one extended cell $25_1$ to the next. In this case, no MIMO/MISO mode is possible between the bordering nodes of two extended cells $25_1$, $25_2$.

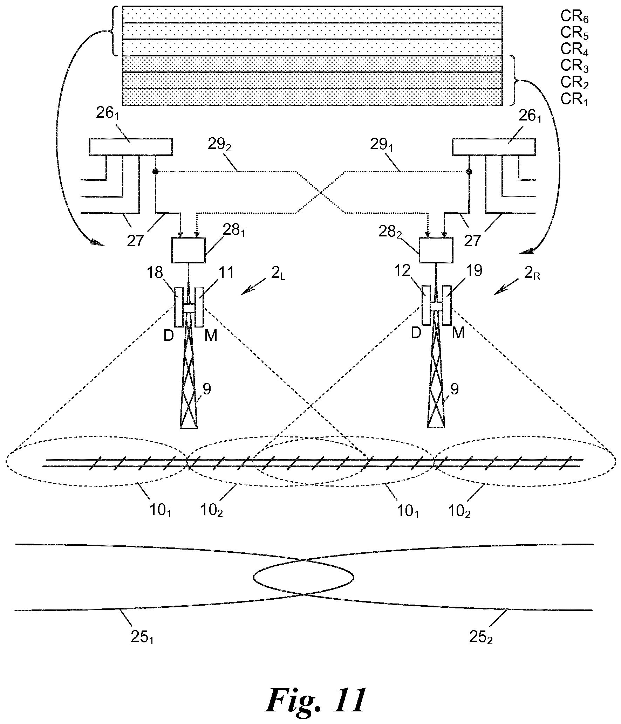

Secondly, Fig. 11 shows a way of employing a MIMO/MISO mode between a right border node $2_R$ and a left border node $2_L$ of two extended cells $25_1$, $25_2$. Again, the nodes $2_R$, $2_L$ have antennas 11, 12 with coverage areas $10_1$, $10_2$ that overlap with each other. The left border $2_L$ node has a remote radio head $28_1$ (RRH) and the right border node has a remote radio head $28_2$. The two remote radio heads $28_1$, $28_2$ can also be embodied as a dual remote radio head connected to both the left and the right border node $2_R$, $2_L$. The common scheduler $26_1$ of the first extended cell $25_1$, which allocates channel resources $CR_i$ for the left border node $2_L$, is here also connected to the remote radio head $28_2$ of the second extended cell $25_2$ via a coupling link $29_1$ for purposes described below. On the other hand, the common scheduler $26_2$ of the second extended cell $25_2$ is here connected to the remote radio head $28_1$ of the left border node $2_L$ of the first extended cell $25_1$ via a coupling

link $29_2$.

Since the two common schedulers $26_1$, $26_2$ cannot directly communicate with each other due to latency reasons, one of the schedulers $26_1$ allocates only a subset of all available channel resources $CR_i$ to an antenna 11 of said left border node $2_L$ facing the second extended cell $25_2$, and the common scheduler $26_2$ of the second extended cell $25_2$ only allocates the remaining available channel resources $CR_i$ to an antenna 12 of said right border node facing the first extended cell $25_1$. In the example of Fig. 10, the common scheduler $26_1$ of the first extended cell allocates the first half of the channel resources $CR_1$, $CR_2$, $CR_3$ and the other common scheduler allocates the second half of the channel resources $CR_4$, $CR_5$, $CR_6$.

The common schedulers $26_1$, $26_2$ then make these channel resources $CR_i$ available to the remote radio heads $28_1$, $28_2$ of the border nodes $2_L$, $2_R$ of the respective other extended cell $25_1$, $25_2$ via the coupling links $29_1$, $29_2$. Thus, the antennas 11, 12 with the overlapping coverage areas $10_1$, $10_2$ in the bordering region of the extended cells $25_1$, $25_2$ have the same - complete - data 3 available for communication. Again, one of the antennas 11 communicates the data 3 in the first block code representation $r_1$ and the other antenna 12 communicates this data 3 in the second block code representation $r_2$ in the same channel resources $CR_i$. By means of this, the MIMO/MISO mode as shown in Fig. 3 can also be employed at the border region of the two extended cells $25_1$, $25_2$. Furthermore, extended cells $25_1$, $25_2$ can employ the same physical cell identifier PCI such that no handover has to be performed when the user terminal 4 switches from an extended cell $25_1$ to a neighbouring extended cell $25_2$.

In many communication standards, especially in LTE, common channels are employed to synchronize a user terminal 4 to the communication channel and deliver general network information to the user terminal 4. The content and the exact location - in frequency and/or time - of the common channels is known by all schedulers $26_1$, $26_2$ of the linear cellular network 1. Through the partitioning of the available channel resources $CR_i$, however, a way of dealing with the common channels is required, too. To this end, either the common scheduler $26_1$ of the first extended cell $25_1$ or the common scheduler $26_2$ of the second extended cell $25_2$ is configured to generate data associated with common channels of the cellular network 1. This means that one of the two schedulers $26_1$, $26_2$ generates and manages all common channels that are to be communicated at the communication section s between the two extended cells $25_1$, $25_2$.

Alternatively, the common scheduler $26_1$ of the first extended cell $25_1$ and the common scheduler $26_2$ of the second extended cell $25_2$ are each configured to generate data 3 associated with common channels of the cellular network in their respective subset of available channel resources $CR_i$. The common schedulers $26_1$, $26_2$ thus share the workload and generate, for example, half of the data associated to the common channels.

While the common channels have fixed locations and content on the communication channels $CR_i$, common channel elements (CCEs) are associated to user specific search space freely distributed over the whole bandwidth of the communication channel to allocate uplink and downlink grants to the various user terminals 4. This means that not only the location but also the content of the CCEs is dependent on the user terminals 4 in the specific extended cell $25_1$, $25_2$. Since only half of the channel resources $CR_i$ are available to one scheduler $26_1$ if the MIMO/MISO mode is to be employed between the extended cells $25_1$, $25_2$, the schedulers $26_1$, $26_2$ each handle grants of channel resources $CR_i$ to user terminals 4 only in CCEs lying in their respective subset of available channel resources $CR_i$. In this option, not all CCE combinations are available due to the partitioning of all available channel resources $CR_i$.

Alternatively, the schedulers $26_1$, $26_2$ are generating their own user specific search space on the virtual constraint that only half of the amount of CCEs are available in total, i.e., the schedulers $26_1$, $26_2$ both determine CCE combinations as if the total bandwidth were i/2, wherein i is the actual total number of channel resources $CR_i$. Then, one of the schedulers $26_1$, $26_2$ applies an offset of i/2 to the CCE combinations that are generated. Thus, all CCE combinations are possible while in the first option CCE combinations are "cut" apart. In this option, the user terminal 4 has to be made aware of this offset, which can indicated in the common channels.

The invention is defined by the appended independent claims. Preferred embodiments of the invention are stipulated in the dependent claims. While several embodiments and/or examples have been disclosed in the description, the subject matter for which protection is sought is strictly and solely limited to those embodiments and/or examples encompassed by the scope of the appended claims. Embodiments and/ or examples mentioned in the description that do not fall under the scope of the claims are useful for understanding the invention.

The invention is not restricted to the specific embodiments described in detail herein but encompasses all variants, combinations and modifications thereof that fall within the framework of the appended claims.

**Claims**

1. System comprising a first and a second node ($2_1$, $2_2$) of a linear cellular network, wherein the nodes ($2_1$, $2_2$) are spaced apart from each other with a mutual spacing, which mutual spacing defines a communication section (s), each node ($2_1$, $2_2$) having at least one antenna (11, 12, 18, 19) for wirelessly communicating with a user terminal (4) located in the communication section (s) between the first and the second node ($2_1$, $2_2$),
wherein both nodes ($2_1$, $2_2$) are configured to com-

municate over a communication channel (CH) having a plurality of channel resources ($CR_i$),

wherein a processor (13) of the system (1) is configured to apply a space-time or space-frequency block coding scheme on data (3) to be communicated to the user terminal (4) to generate a first and a second block code representation ($r_1$, $r_2$) of the same data (3),

wherein the first node ($2_1$) is configured to communicate the first block code representation ($r_1$) of the data (3) to the user terminal (4) in one of the channel resources ($CR_i$) and the second node ($2_2$) is configured to communicate the second block code representation ($r_2$) of the data (3) to the user terminal (4) in the same channel resource ($CR_i$),

wherein the first node ($2_1$) comprises a first and a second directional antenna (11, 18), which are directed in substantially opposite directions ($d_L$, $d_R$), wherein data (3) can be independently communicated over both antennas (11, 18) in the same channel resource ($CR_i$), and

wherein the first directional antenna (11) of the first node ($2_1$) is configured to communicate the first block code representation ($r_1$) of data (3) and the second directional antenna (18) of the first node ($2_1$) is configured to communicate the second block code representation ($r_2$) of data (3).

2. System according to claim 1, **characterised in that** the space-time or space-frequency block coding scheme is an Alamouti scheme, in which the data (3) to be communicated to the user terminal (4) consists of a first and a second data symbol ($ds_1$, $ds_2$), the first representation ($r_1$) having the first data symbol ($ds_1$) followed by the second data symbol ($ds_2$) and the second representation ($r_2$) having a negative complex-conjugate of the second data symbol ($ds_2$) followed by a complex-conjugate of the first data symbol ($ds_1$).

3. System according to claim 1, **characterised in that** each node ($2_1$, $2_2$) has two antennas (11, 12) for wirelessly communicating with a user terminal (4) located in the communication section (s) between the first and the second node ($2_1$, $2_2$) such that an Alamouti scheme with four transmit antennas (11, 12) can be employed.

4. System according to any one of claims 1 to 3, **characterised in that** the coverage areas ($10_1$, $10_2$) of the first and second directional antenna (11, 18) of the first node ($2_1$) overlap in an area (A) substantially underneath the node,

wherein the system (1) is configured to communicate, when the user terminal (4) is located at a first distance (d) from the first node ($2_1$) lower than a near-area threshold ($t_{n1}$, $t_{n2}$), the first block code representation ($r_1$) of the data (3) in one of the channel resources ($CR_i$) via the first antenna (11) of the first node ($2_1$) and to communicate the second block code representation ($r_2$) of the same data (3) in the same channel resource ($CR_i$) via the second antenna (18) of the first node ($2_1$).

5. System according to any one of the claims 1 to 4, **characterised in that** the system (1) is configured to communicate data (3) only via the first node ($2_1$) when the user terminal (4) is located at a second distance (d) from the first node ($2_1$) lower than a first far-area threshold ($t_{f1}$),

wherein the system (1) is configured to communicate data (3) only via the second node ($2_2$) when the user terminal (4) is located at a third distance (d) from the second node ($2_2$) lower than a second far-area threshold ($t_{f2}$), and

wherein the system (1) is configured to communicate data (3) by both nodes ($2_1$, $2_2$) when the user terminal (4) is located at a fourth distance (d) from the first node ($2_1$) higher than the first far-area threshold ($t_{f1}$) and at a fifth distance (d) from the second node ($2_2$) higher than the second far-area threshold ($t_{f2}$).

6. System according to claim 5, **characterised in that** the system (1) is configured to, when the first node ($2_1$) communicates with a first user terminal (4) located at a sixth distance (d) from the first node ($2_1$) lower than the first far-area threshold ($t_{f1}$), communicate data (3) with a second user terminal (4) located at a seventh distance (d) from the second node ($2_2$) lower than the second far-area threshold ($t_{f2}$) in the same channel resource ($CR_i$).

7. System according to any one of the claims 4 to 6, **characterised in that** the distance (d) of the user terminal (4) to either of the nodes ($2_1$, $2_2$) is determined by means of a received signal strength indication (RSSI) or by means of a timing advance (TA) value.

8. System according to any one of the claims 1 to 7, **characterised in that** the system (1) is configured to use the same physical cell identifier (PCI) for at least the first and the second node ($2_1$, $2_2$), preferably for six nodes in total, to form a first extended cell ($25_1$),

wherein a common scheduler ($26_1$) is connected to each of the nodes ($2_1$, $2_2$) in the first extended cell ($25_1$) and is configured to allocate channel resources ($CR_i$).

9. System according to claim 8, **characterised in that** the system (1) has a second extended cell ($25_2$) with the same properties as the first extended cell ($25_1$), wherein a coverage area ($10_1$) of a left border node ($2_L$) of the first extended cell ($25_1$) overlaps with a coverage area ($10_2$) of a right border node ($2_R$) of the second extended cell ($25_2$) .

10. System according to claim 9, **characterised in that** the common scheduler ($26_1$) of the first extended cell ($25_1$) is configured to allocate a subset of all available channel resources ($CR_i$) for communication to an antenna (11) of said left border node ($2_L$) facing the second extended cell ($25_2$), and the common scheduler ($26_2$) of the second extended cell ($25_2$) is configured to allocate the remaining available channel resources ($CR_i$) for communication to an antenna (12) of said right border node ($2_L$) facing the first extended cell ($25_1$), wherein the system (1) is configured to provide data (3) to be communicated by the right border node ($2_R$) also to the left border node ($2_L$) and is further configured to provide data (3) to be communicated by the left border node ($2_L$) also to the right border node ($2_R$), and wherein the left border node ($2_L$) communicates the first block code representation ($r_1$) of said data (3) to a user terminal (4) between the left border node ($2_L$) and the right border node ($2_R$) and the right border node ($2_R$) communicates the second block code representation ($r_2$) of said data (3) to said user terminal (4) between the left border node ($2_L$) and the right border node ($2_R$).

11. System according to claim 9 or 10, **characterised in that** the common scheduler ($26_1$) of the first extended cell ($25_1$) or the common scheduler ($26_2$) of the second extended cell ($25_2$) is configured to generate data (3) associated with common channels of the cellular network.

12. System according to claim 9 or 10, **characterised in that** the scheduler ($26_1$) of the first extended cell ($25_1$) and the scheduler ($26_2$) of the second extended cell ($25_2$) are each configured to generate data (3) associated with common channels of the cellular network in their respective subset of available channel resources ($CR_i$).

13. System according to any one of the claims 8 to 12, **characterised in that** the scheduler ($26_1$) of the first extended cell ($25_1$) and the scheduler ($26_2$) of the second extended cell ($25_2$) are each configured to handle grants of channel resources ($CR_i$) to user terminals (4) in common channel elements lying in their respective subset of available channel resources ($CR_i$).

**Patentansprüche**

1. System, umfassend einen ersten und einen zweiten Knoten ($2_1$, $2_2$) eines linearen zellularen Netzwerkes, wobei die Knoten ($2_1$, $2_2$) voneinander in einem gegenseitigen Abstand beabstandet sind, welcher gegenseitige Abstand einen Kommunikationsbereich (s) definiert, wobei jeder Knoten ($2_1$, $2_2$) zumindest eine Antenne (11, 12, 18, 19) zur drahtlosen Kommunikation mit einem im Kommunikationsbereich (s) zwischen dem ersten und dem zweiten Knoten ($2_1$, $2_2$) liegenden Benutzerendgerät (4) hat, wobei beide Knoten ($2_1$, $2_2$) dafür ausgebildet sind, über einen eine Vielzahl von Kanalressourcen ($CR_i$) aufweisenden Kommunikationskanal (CH) zu kommunizieren, wobei ein Prozessor (13) des Systems (1) dafür ausgebildet ist, ein Raum/Zeit- oder Raum/Frequenz-Blockkodierungsschema auf Daten (3) anzuwenden, welche dem Benutzerendgerät (4) zum Erzeugen einer ersten und einer zweiten Blockkodedarstellung ($r_1$, $r_2$) derselben Daten (3) zu kommunizieren sind, wobei der erste Knoten ($2_1$) dafür ausgebildet ist, dem Benutzerendgerät (4) die erste Blockkodedarstellung ($r_1$) der Daten (3) in einer der Kanalressourcen ($CR_i$) zu kommunizieren, und der zweite Knoten ($2_2$) dafür ausgebildet ist, dem Benutzerendgerät (4) die zweite Blockkodedarstellung ($r_2$) der Daten (3) in derselben Kanalressource ($CR_i$) zu kommunizieren, wobei der erste Knoten ($2_1$) eine erste und eine zweite Richtantenne (11, 18) aufweist, welche in im wesentlichen entgegengesetzte Richtungen ($d_L$, $d_R$) ausgerichtet sind, wobei Daten (3) unabhängig über beide Antennen (11, 18) in derselben Kanalressource ($CR_i$) kommuniziert werden können, und wobei die erste Richtantenne (11) des ersten Knotens ($2_1$) dafür ausgebildet ist, die erste Blockkodedarstellung ($r_1$) der Daten (3) zu kommunizieren, und die zweite Richtantenne (18) des ersten Knotens ($2_1$) dafür ausgebildet ist, die zweite Blockkodedarstellung ($r_2$) der Daten (3) zu kommunizieren.

2. System nach Anspruch 1, **dadurch gekennzeichnet, dass** das Raum/Zeit- oder Raum/Frequenz-Blockkodierungsschema ein Alamouti-Schema ist, in welchem die dem Benutzerendgerät (4) zu kommunizierenden Daten (3) aus einem ersten und einem zweiten Datensymbol ($ds_1$, $ds_2$) bestehen, wobei die erste Darstellung ($r_1$) das erste Datensymbol ($ds_1$) gefolgt von dem zweiten Datensymbol ($ds_2$) und die zweite Darstellung ($r_2$) eine negative Komplex-Konjugierte des zweiten Datensymbols ($ds_2$) gefolgt von einer Komplex-Konjugierten des ersten Datensymbols ($ds_1$) aufweist.

3. System nach Anspruch 1, **dadurch gekennzeichnet, dass** jeder Knoten ($2_1$, $2_2$) zwei Antennen (11, 12) zur drahtlosen Kommunikation mit einem im Kommunikationsbereich (s) zwischen dem ersten und dem zweiten Knoten ($2_1$, $2_2$) liegenden Benutzerendgerät (4) hat, sodass ein Alamouti-Schema mit vier Sendeantennen (11, 12) angewendet werden kann.

4. System nach einem der Ansprüche 1 bis 3, **dadurch gekennzeichnet, dass** die Abdeckungsbereiche ($10_1$, $10_2$) der ersten und zweiten Richtantenne (11, 18) des ersten Knotens ($2_1$) sich in einem Bereich (A) im wesentlichen unter dem Knoten überlappen, wobei das System (1) dafür ausgebildet ist, die erste Blockkodedarstellung ($r_1$) der Daten (3), wenn sich das Benutzerendgerät (4) in einem ersten Abstand (d) vom ersten Knoten ($2_1$) befindet, welcher Abstand geringer als ein Nahbereichsschwellwert ($t_{n1}$, $t_{n2}$) ist, in einer der Kanalressourcen ($CR_i$) über die erste Antenne (11) des ersten Knotens ($2_1$) zu kommunizieren und die zweite Blockkodedarstellung ($r_2$) derselben Daten (3) in derselben Kanalressource ($CR_i$) über die zweite Antenne (18) des ersten Knotens ($2_1$) zu kommunizieren.

5. System nach einem der Ansprüche 1 bis 4, **dadurch gekennzeichnet, dass** das System (1) dafür ausgebildet ist, Daten (3) nur über den ersten Knoten ($2_1$) zu kommunizieren, wenn sich das Benutzerendgerät (4) in einem zweiten Abstand (d) vom ersten Knoten ($2_1$) befindet, welcher Abstand geringer als ein erster Fernbereichsschwellwert ($t_{f1}$) ist, wobei das System (1) dafür ausgebildet ist, Daten (3) nur über den zweiten Knoten ($2_2$) zu kommunizieren, wenn sich das Benutzerendgerät (4) in einem dritten Abstand (d) vom zweiten Knoten ($2_2$) befindet, welcher Abstand geringer als ein zweiter Fernbereichsschwellwert ($t_{f2}$) ist, und wobei das System (1) dafür ausgebildet ist, Daten (3) über beide Knoten ($2_1$, $2_2$) zu kommunizieren, wenn sich das Benutzerendgerät (4) in einem vierten Abstand (d) vom ersten Knoten ($2_1$) befindet, welcher Abstand größer als der erste Fernbereichsschwellwert ($t_{f1}$) ist, und in einem fünften Abstand (d) vom zweiten Knoten ($2_2$), welcher Abstand größer als der zweite Fernbereichsschwellwert ($t_{f2}$) ist.

6. System nach Anspruch 5, **dadurch gekennzeichnet, dass** das System (1) dafür ausgebildet ist, Daten (3), wenn der erste Knoten ($2_1$) mit einem ersten Benutzerendgerät (4), das sich in einem sechsten Abstand (d) vom ersten Knoten ($2_1$) befindet, welcher Abstand geringer als der erste Fernbereichsschwellwert ($t_{f1}$) ist, mit einem zweiten Benutzerendgerät (4) in derselben Kanalressource ($CR_i$) zu kommunizieren, das sich in einem siebten Abstand (d) vom zweiten Knoten ($2_2$) befindet, welcher Abstand geringer als der zweite Fernbereichsschwellwert ($t_{f2}$) ist.

7. System nach einem der Ansprüche 4 bis 6, **dadurch gekennzeichnet, dass** der Abstand (d) des Benutzerendgerätes (4) zu jedem der Knoten ($2_1$, $2_2$) mittels eines Empfangssignalstärke-Wertes (RSSI) oder Timing-Advance-Wertes (TA) bestimmt wird.

8. System nach einem der Ansprüche 1 bis 7, **dadurch gekennzeichnet, dass** das System (1) dafür ausgebildet ist, dieselbe physikalische Zellidentifikation (PCI) für zumindest den ersten und zweiten Knoten ($2_1$, $2_2$) zu verwenden, bevorzugt für sechs Knoten insgesamt, um eine erste erweiterte Zelle ($25_1$) zu bilden, wobei ein gemeinsamer Scheduler ($26_1$) mit jedem der Knoten ($2_1$, $2_2$) in der ersten erweiterten Zelle ($25_1$) verbunden und zum Zuteilen von Kanalressourcen ($CR_i$) ausgebildet ist.

9. System nach Anspruch 8, **dadurch gekennzeichnet, dass** das System (1) eine zweite erweiterte Zelle ($25_2$) mit denselben Eigenschaften wie die erste erweiterte Zelle ($25_1$) hat, wobei ein Abdeckungsbereich ($10_1$) eines linken Grenzknotens ($2_L$) der ersten erweiterten Zelle ($25_1$) sich mit einem Abdeckungsbereich ($10_2$) eines rechten Grenzknotens ($2_R$) der zweiten erweiterten Zelle ($25_2$) überlappt.

10. System nach Anspruch 9, **dadurch gekennzeichnet, dass** der gemeinsame Scheduler ($26_1$) der ersten erweiterten Zelle ($25_1$) dafür ausgebildet ist, eine Teilmenge aller verfügbaren Kanalressourcen ($CR_i$) einer Antenne (11) des genannten linken Grenzknotens ($2_L$), welcher der zweiten erweiterten Zelle ($25_2$) zugewandt ist, zur Kommunikation zuzuteilen, und der gemeinsame Scheduler ($26_2$) der zweiten erweiterten Zelle ($25_2$) dafür ausgebildet ist, die übrigen verfügbaren Kanalressourcen ($CR_i$) einer Antenne (12) des genannten rechten Grenzknotens ($2_R$), welcher der ersten erweiterten Zelle ($25_1$) zugewandt ist, zur Kommunikation zuzuteilen, wobei das System (1) dafür ausgebildet ist, vom rechten Grenzknoten ($2_R$) zu kommunizierende Daten (3) auch dem linken Grenzknoten ($2_L$) bereitzustellen, und ferner dafür ausgebildet ist, vom linken Grenzknoten ($2_L$) zu kommunizierende Daten (3) auch dem rechten Grenzknoten ($2_R$) bereitzustellen, und wobei der linke Grenzknoten ($2_L$) die erste Blockkodedarstellung ($r_1$) der genannten Daten (3) einem Benutzerendgerät (4) zwischen dem linken Grenzknoten ($2_L$) und dem rechten Grenzknoten ($2_R$) kommuniziert und der rechte Grenzknoten ($2_R$) die zweite Blockkodedarstellung ($r_2$) der genannten Daten (3) dem genannten Benutzerendgerät (4) zwischen dem linken Grenzknoten ($2_L$) und dem rechten Grenzknoten ($2_R$) kommuniziert.

11. System nach Anspruch 9 oder 10, **dadurch gekennzeichnet, dass** der gemeinsame Scheduler ($26_1$) der ersten erweiterten Zelle ($25_1$) oder der gemein-

same Scheduler (26$_2$) der zweiten erweiterten Zelle (25$_2$) dafür ausgebildet ist, mit gemeinsamen Kanälen des zellularen Netzwerkes verknüpfte Daten (3) zu erzeugen.

12. System nach Anspruch 9 oder 10, **dadurch gekennzeichnet, dass** der Scheduler (26$_1$) der ersten erweiterten Zelle (25$_1$) und der Scheduler (26$_2$) der zweiten erweiterten Zelle (25$_2$) jeweils dafür ausgebildet sind, Daten (3) zu erzeugen, die mit gemeinsamen Kanälen des zellularen Netzwerkes in deren jeweiliger Teilmenge von verfügbaren Kanalressourcen (CR$_i$) verknüpft sind.

13. System nach einem der Ansprüche 8 bis 12, **dadurch gekennzeichnet, dass** der Scheduler (26$_1$) der ersten erweiterten Zelle (25$_1$) und der Scheduler (26$_2$) der zweiten erweiterten Zelle (25$_2$) jeweils dafür ausgebildet sind, Zuteilungen von Kanalressourcen (CR$_i$) an Benutzerendgeräte (4) in gemeinsamen Kanalelementen, welche in deren jeweiliger Teilmenge von verfügbaren Kanalressourcen (CR$_i$) liegen, durchzuführen.

## Revendications

1. Système comprenant un premier et un second noeud (2$_1$, 2$_2$) d'un réseau cellulaire linéaire, dans lequel les noeuds (2$_1$, 2$_2$) sont espacés l'un de l'autre avec un espacement mutuel, lequel espacement mutuel délimite une ou plusieurs sections de communication, chaque noeud (2$_1$, 2$_2$) ayant au moins une antenne (11, 12, 18, 19) pour une communication sans fil avec un terminal d'utilisateur (4) situé dans la section de communication entre le premier et le second noeud (2$_1$, 2$_2$),
   dans lequel les deux noeuds (2$_1$, 2$_2$) sont configurés pour communiquer sur un canal de communication (CH) ayant une pluralité de ressources de canal (CR$_i$),
   dans lequel un processeur (13) du système (1) est configuré pour appliquer un schéma de codage de bloc espace-temps ou espace-fréquence sur des données (3) à communiquer au terminal d'utilisateur (4) afin de générer une première et une seconde représentation de code de bloc (r$_1$, r$_2$) des mêmes données (3),
   dans lequel le premier noeud (2$_1$) est configuré pour communiquer la première représentation de code de bloc (r$_1$) des données (3) au terminal d'utilisateur (4) dans l'une des ressources de canal (CR$_i$) et le second noeud (2$_2$) est configuré pour communiquer la seconde représentation de code de bloc (r$_2$) au terminal d'utilisateur (4) dans la même ressource de canal (CR$_i$),
   dans lequel le premier noeud (2$_1$) comprend une première et une seconde antenne directionnelle (11, 18), lesquelles sont dirigées dans des directions sensiblement opposées (d$_L$, d$_R$), où les données (3) peuvent être communiquées indépendamment sur les deux antennes (11, 18) dans la même ressource de canal (CR$_i$), et
   dans lequel la première antenne directionnelle (11) du premier noeud (2$_1$) est configurée pour communiquer la première représentation de code de bloc (r$_1$) des données (3) et la seconde antenne directionnelle (18) du premier noeud (2$_1$) est configurée pour communiquer la seconde représentation de code de bloc (r$_2$) des données (3).

2. Système selon la revendication 1, **caractérisé en ce que** le schéma de codage de bloc espace-temps ou espace-fréquence est un schéma d'Alamouti, dans lequel les données (3) à communiquer au terminal d'utilisateur (4) consistent en un premier et un second symbole des données (ds$_1$, ds$_2$), la première représentation (r$_1$) ayant le premier symbole des données (ds$_1$) suivi par le second symbole des données (ds$_2$) et la seconde représentation (r$_2$) ayant un conjugué complexe négatif du second symbole des données (ds$_2$) suivi par un conjugué complexe du premier symbole des données (ds$_1$).

3. Système selon la revendication 1, **caractérisé en ce que** chaque noeud (2$_1$, 2$_2$) a deux antennes (11, 12) pour la communication sans fil avec un terminal d'utilisateur (4) situé dans la section de communication entre le premier et le second noeud (2$_1$, 2$_2$) de sorte qu'un schéma d'Alamouti avec quatre antennes de transmission (11, 12) peut être employé.

4. Système selon l'une quelconque des revendications 1 à 3, **caractérisé en ce que** les zones de couverture (10$_1$, 10$_2$) de la première et de la seconde antenne directionnelle (11, 18) du premier noeud (2$_1$) se chevauchent dans une zone (A) sensiblement en dessous du noeud,
   où le système (1) est configuré pour communiquer, lorsque le terminal utilisateur (4) est situé à une première distance (d) du premier noeud (2$_1$) inférieure à un seuil de zone proche (t$_{n1}$, t$_{n2}$), la première représentation du code de bloc (r$_1$) des données (3) dans l'une des ressources de canal (CR$_i$) par l'intermédiaire de la première antenne (11) du premier noeud (2$_1$) et pour communiquer la seconde représentation de code de bloc (r$_2$) des mêmes données (3) dans la même ressource de canal (CR$_i$) par l'intermédiaire de la seconde antenne (18) du premier noeud (2$_1$).

5. Système selon l'une quelconque des revendications 1 à 4, **caractérisé en ce que** le système (1) est configuré pour communiquer des données (3) uniquement par l'intermédiaire du premier noeud (2$_1$) lorsque le terminal d'utilisateur (4) est situé à une seconde distance (d) du premier noeud ($2_1$) inférieure à un premier seuil de zone lointaine ($t_{f1}$),

où le système (1) est configuré pour communiquer des données (3) uniquement par l'intermédiaire du second noeud ($2_2$) lorsque le terminal d'utilisateur (4) est situé à une troisième distance (d) du second noeud ($2_2$) inférieure à un second seuil de zone lointaine ($t_{f2}$), et

où le système (1) est configuré pour communiquer des données (3) par les deux noeuds ($2_1$, $2_2$) lorsque le terminal d'utilisateur (4) est situé à une quatrième distance (d) du premier noeud ($2_1$) supérieure au premier seuil de zone lointaine ($t_{f1}$) et à une cinquième distance (d) du second noeud ($2_2$) supérieure au second seuil de zone lointaine ($t_{f2}$).

**6.** Système selon la revendication 5, **caractérisé en ce que** le système (1) est configuré pour, lorsque le premier noeud ($2_1$) communique avec un premier terminal d'utilisateur (4) situé à une sixième distance (d) du premier noeud ($2_1$) inférieure à un premier seuil de zone lointaine ($t_{f1}$), communiquer des données (3) avec un second terminal d'utilisateur (4) situé à une septième distance (d) du second noeud ($2_2$) inférieure au second seuil de zone lointaine ($t_{f2}$) dans la même ressource de canal ($CR_i$).

**7.** Système selon l'une quelconque des revendications 4 à 6, **caractérisé en ce que** la distance (d) du terminal d'utilisateur (4) à l'un quelconque des noeuds ($2_1$, $2_2$) est déterminée au moyen d'une indication de l'intensité du signal reçu (RSSI) ou au moyen d'une valeur d'avance de synchronisation (TA).

**8.** Système selon l'une quelconque des revendications 1 à 7, **caractérisé en ce que** le système (1) est configuré pour utiliser le même identificateur de cellule physique (PCI) pour au moins le premier et le second noeud ($2_1$, $2_2$), de préférence pour six noeuds au total, pour former une première cellule étendue ($25_1$),

dans lequel un ordonnanceur commun ($26_1$) est connecté à chacun des noeuds ($2_1$, $2_2$) dans la première cellule étendue ($25_1$) et est configuré pour attribuer les ressources de canal ($CR_i$).

**9.** Système selon la revendication 8, **caractérisé en ce que** le système (1) a une seconde cellule étendue ($25_2$) avec les mêmes propriétés que la première cellule étendue ($25_1$),

dans lequel une zone de couverture ($10_1$) d'un noeud frontière gauche ($2_L$) de la première cellule étendue ($25_1$) se chevauche avec une zone de couverture ($10_2$) d'un noeud frontière droit ($2_R$) de la seconde cellule étendue ($25_2$).

**10.** Système selon la revendication 9, **caractérisé en ce que** l'ordonnanceur commun ($26_1$) de la première

cellule étendue ($25_1$) est configuré pour attribuer un sous-ensemble de toutes les ressources de canal disponibles ($CR_i$) pour la communication à une antenne (11) dudit noeud frontière gauche ($2_L$) faisant face à la seconde cellule étendue ($25_2$), et l'ordonnanceur commun ($26_2$) de la seconde cellule étendue ($25_2$) est configuré pour attribuer les ressources de canal disponibles restantes ($CR_i$) pour la communication à une antenne (12) dudit noeud frontière droit ($2_R$) faisant face à la première cellule étendue ($25_1$),

où le système (1) est configuré pour fournir les données (3) à communiquer par le noeud frontière droit ($2_R$) également au noeud frontière gauche ($2_L$) et est en outre configuré pour fournir les données (3) à communiquer par le noeud frontière gauche ($2_L$) également au noeud frontière droit ($2_R$), et

où le noeud frontière gauche ($2_L$) communique à la première représentation de code de bloc ($r_1$) desdites données (3) à un terminal d'utilisateur (4) entre le noeud frontière gauche ($2_L$) et le noeud frontière droit ($2_R$) et le noeud frontière droit ($2_R$) communique la seconde représentation de code de bloc ($r_2$) desdites données (3) audit terminal d'utilisateur (4) entre le noeud frontière gauche ($2_L$) et le noeud frontière droit ($2_R$).

**11.** Système selon la revendication 9 ou 10, **caractérisé en ce que** l'ordonnanceur commun ($26_1$) de la première cellule étendue ($25_1$) ou l'ordonnanceur commun ($26_2$) de la seconde cellule étendue ($25_2$) est configuré pour générer les données (3) associées aux canaux communs du réseau cellulaire.

**12.** Système selon la revendication 9 ou 10, **caractérisé en ce que** l'ordonnanceur ($26_1$) de la première cellule étendue ($25_1$) et l'ordonnanceur ($26_2$) de la seconde cellule étendue ($25_2$) sont chacun configurés pour générer les données (3) associées aux canaux communs du réseau cellulaire dans leurs sous-ensembles respectifs des ressources de canal disponibles ($CR_i$).

**13.** Système selon l'une quelconque des revendications 8 à 12, **caractérisé en ce que** l'ordonnanceur ($26_1$) de la première cellule étendue ($25_1$) et l'ordonnanceur ($26_2$) de la seconde cellule étendue ($25_2$) sont chacun configurés pour gérer les allocations des ressources de canal ($CR_i$) à des terminaux d'utilisateurs (4) dans les éléments du canal commun situés dans leurs sous-ensembles respectifs des ressources de canal disponibles ($CR_i$).

**Fig. 1**

(Prior Art)

**Fig. 2**

**Fig. 3**

**Fig. 4**

**Fig. 5**

**Fig. 6**

**Fig. 7**

**Fig. 8**

**Fig. 9**

**Fig. 10**

*Fig. 11*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100157901 A1
- US 20140169505 A1

- WO 2016119914 A1

**Non-patent literature cited in the description**

- A Survey on High-Speed Railway Communications: A Radio Resource Management Perspective. **SHENGFU XU et al.** ARXIV.ORG. Cornell University Library, 17 March 2016

- **LIANG HENG et al.** Performance of the 3GPP LTE Space-Frequency Block Codes in Frequency-Selective Channels With Imperfect Channel Estimation. *IEEE Transactions on vehicular technology,* 01 May 2015, vol. 64 (5), 1848-1855